# EUROPÄISCHE PATENTSCHRIFT

(11) **EP 4 001 022 B1**
(45) Veröffentlichungstag und Bekanntmachung des Hinweises auf die Patenterteilung: **01.02.2023**
(21) Anmeldenummer: 21207402.5
(22) Anmeldetag: 10.11.2021
(51) Int. Cl.: B60R 19/12

(54) **STOSSFÄNGERANORDNUNG**
BUMPER ARRANGEMENT
AGENCEMENT DE PARE-CHOCS

(30) Priorität: 13.11.2020 DE 102020130039
(43) Veröffentlichungstag der Anmeldung: 25.05.2022
(73) Patentinhaber: Benteler Automobiltechnik GmbH, 33102 Paderborn (DE)
(72) Erfinder: Paare, Mirko, 33106 Paderborn (DE); Mollemeier, Elmar, 33129 Delbrück (DE)
(74) Vertreter: Osterhoff, Utz

(56) Entgegenhaltungen:
- EP-A2- 1 072 501
- DE-A1-102016 123 628
- DE-A1-102017 124 590
- DE-B3-102017 118 514
- DE-T5-112012 006 244
- US-A1- 2010 213 742

## Beschreibung

Die vorliegende Erfindung betrifft eine Stoßfängeranordnung zur Anordnung an einem Kraftfahrzeug gemäß den Merkmalen im Oberbegriff von Anspruch 1.

Aus dem Stand der Technik ist es bekannt, dass Kraftfahrzeuge front- bzw. endseitig Stoßfängeranordnungen aufweisen. Im Falle eines Fahrzeugcrashes bzw. eines Auffahrunfalls oder auch eines Anpralls an einen Gegenstand, werden durch eine solche Stoßfängeranordnung zwei Aufgaben erfüllt. Zum einen ist ein Querträger vorhanden. Der Querträger besitzt eine hinreichende Steifigkeit um zu verhindern, dass ein entsprechender Gegenstand oder ein Kraftfahrzeug zu stark in den Front- oder Endbereich eindringen würde. Mithin wird ein evtl. punktuelles Auftreffen, beispielsweise auf einen Pfahl, durch den Querträger auf einen Großteil der Kraftfahrzeugbreite übertragen.

Eine zweite Aufgabe, die durch eine Stoßfängeranordnung erfüllt wird, ist die Wandlung von Crashenergie in Umformabarbeit und dadurch eine entsprechende Verminderung der Aufprallenergie. Hierzu ist ein jeweiliger Querträger über Crashboxen an das Kraftfahrzeug gekoppelt. Die Crashboxen sind hierzu auf die Kraftfahrzeugquerrichtung bezogen, zwischen einem Mittelbereich und einem Endbereich des Querträgers angeordnet, mithin auf die Kraftfahrzeugbreite bezogen, jeweils zwischen einem Drittel und einem Viertel mit der Länge im äußeren Bereich des Querträgers angeordnet. Die Crashboxen werden dann zumeist an Längsträger des Kraftfahrzeugs gekoppelt. Im Falle eines Aufpralls falten sich die Crashboxen beispielsweise ziehharmonikaartig und wandeln somit Crashenergie in Umformarbeit um.

Aus der DE 10 2017 118 514 B3 ist ein Stoßfängerträger nach dem Oberbegriff von Anspruch 1 für ein Fahrzeug bekannt welcher eine äußere Schale mit Durchzügen aufweist.

Aufgabe der vorliegenden Erfindung ist es, eine Stoßfängeranordnung bereitzustellen, die bei Eindringung eines aufprallenden Gegenstandes oder Kraftfahrzeuges eine Vergleichmäßigung herbeiführt und Peaks sowohl im eigenen Fahrzeug als auch in einer Barriere zu reduzieren.

Die zuvor genannte Aufgabe wird erfindungsgemäß mit einer Stoßfängeranordnung für ein Kraftfahrzeug mit den Merkmalen im Anspruch 1 gelöst.

Vorteilhafte Ausgestaltungsvarianten der vorliegenden Erfindung sind Gegenstand der abhängigen Ansprüche.

Die vorliegende Erfindung weist eine Stoßfängeranordnung für ein Kraftfahrzeug auf. Hierbei erstreckt sich ein Querträger im Wesentlichen über einen Großteil der Kraftfahrzeugbreite. Ein solcher Querträger wird im Front- bzw. Heckbereich des Kraftfahrzeuges montiert. Der Querträger selbst wird über Crashboxen an das Kraftfahrzeug gekoppelt. Insbesondere erfolgt dies an die jeweiligen Endseiten von Längsträgern an dem Kraftfahrzeug. Der Querträger selbst ist als werkstoffeinheitliches einstückiges Pressumformbauteil ausgebildet. Dieser weist insbesondere im Querschnitt eine Hutform, mithin einen hutförmigen Querschnitt auf. Hierzu ist das Bauteil insbesondere aus einem hochfesten Stahl mit mehr als 1200 MPa, insbesondere mehr als 1300 MPa Zugfestigkeit ausgebildet. Besonders bevorzugt ist der Querträger als Warmumform- und Presshärtebauteil hergestellt.

Erfindungsgemäß zeichnet sich der Querträger dadurch aus, dass er in einem jeweiligen in Kraftfahrzeugquerrichtung Endbereich, bezogen auf die Kraftfahrzeugvertikalrichtung vorzugsweise schräg nach unten orientiert verlaufend ausgebildet ist. Zudem ist der Endbereich ringförmig ausgebildet. Ringförmig bedeutet dabei nicht zwangsläufig, kreisringförmig rund. Es kann sich dabei auch um eine quadratische Ringform handeln. Dies schließt jedoch gerade nicht aus, dass erfindungsgemäß optional weiterhin der Endbereich, mithin ein außenliegender Teil der ringförmigen Anordnung schräg nach unten orientiert verlaufend, ausgebildet ist.

Durch diese erfindungsgemäße Maßnahme wird erreicht, dass der Querträger selbst zum einen derart hoch montiert ist, dass er beispielsweise in einem Bump-to-Bumper-Test eine ausreichende Überdeckung, bezogen auf die Kraftfahrzeugvertikalrichtung mit einem anderen Querträger eines kollidierenden Fahrzeugs erreicht. Gleichzeitig wird jedoch sichergestellt, dass der Endbereich im Falle einer Deformation in Kraftfahrzeuglängsrichtung auf ein dahinter befindliches Radhaus bzw. Rad auftrifft und sich hier zusätzlich abstützt. Über das Rad bzw. die Radaufhängung selbst erfolgt somit ein weiteres Widerstandsmoment in Kraftfahrzeuglängsrichtung. Bei einem Crash mit hoher Intensität würde sich das Rad auf den wiederum in Kraftfahrzeuglängsrichtung hinter dem Rad befindlichen Schweller abstützen. Somit wird neben dem Längsträger ein weiterer Lastpfad erreicht und damit ein besserer Schutz des Fahrgastraumes realisiert. Durch das schräg nach unten orientierte Verlaufen des Querträgers wird wiederum sichergestellt, dass der Querträger möglichst mittig auf das dahinter befindliche Rad auftrifft bzw. sich derart an dem Rad abstützt, dass auf die Vertikalrichtung bezogen, unterhalb des Rades eingreift und somit gerade ein Aufbocken bzw. nach oben gerichtetes Abgleiten verhindert ist.

Damit der Querträger selbst eine hohe Steifigkeit besitzt, ist der Querschnitt des Querträgers hutförmig ausgebildet. Insbesondere ist der Querschnitt des Querträgers auch in dem ringförmigen Bereich größtenteils profiliert, insbesondere u-förmig, besonders bevorzugt hutförmig ausgebildet. Somit weist der Querträger eine hohe Verformungssteifigkeit in Kraftfahrzeuglängsrichtung auf. Auch kann der Querträger im Querschnitt selbst doppelhutförmig ausgebildet sein.

Weiterhin besonders bevorzugt ist die Öffnung der Hutform auf die Längsrichtung bezogen, nach vorne zeigend bzw. von dem Kraftfahrzeug weg zeigend orientiert. Dies bietet erfindungsgemäß den Vorteil, dass bei Verformung in Richtung Radhaus die Rückseite der Hutform, insbesondere mit abgerundeter Kontur auf das dahinter befindliche Rad auftrifft. Eine Zerstörung des Reifens wird hierdurch sicher vermieden.

Weiterhin ist vorgesehen, dass der ringförmig ausgebildete Bereich gegenüber dem eigentlichen Teil des Querträgers auf die Kraftfahrzeugvertikalrichtung nach unten zeigend bzw. nach unten versetzt angeordnet ist. Eine Oberseite des ringförmigen Bereiches ist jedoch integraler Bestandteil des Querträgers. Der ringförmige Bereich weist insbesondere in seiner Mitte eine Aussparung auf.

Der eigentliche Endbereich bzw. das äußere Ende des Querträgers ist in seinem Querschnitt verbreitert ausgebildet. Auch dies bietet eine größere Abstützfläche an dahinter befindlichem Radhaus bzw. Reifen.

In seinem Querschnitt verbreitert bedeutet zum einen, dass durch die Ringform selbst eine größere Querschnittsfläche bereitgestellt ist. Im Querschnitt verbreitert kann jedoch auch bedeuten, dass die Querschnittsbreite oder Querschnittshöhe selbst gegenüber einem Mittelabschnitt größer ausgebildet ist, also breiter ausgebildet ist und somit durch diese Verbreiterung mehr Querschnittsfläche zur Verfügung steht. Dies wäre dann ergänzend noch einmal zu der Querschnittsvergrößerung aufgrund der Ringform. Somit wird insgesamt eine größere Aufprallfläche bereitgestellt, insbesondere im Vergleich zu einem herkömmlichen, einfachen durch Querträger, ohne Ringform.

Ein nach unten verlaufender Teil des ringförmigen Bereiches ist unterhalb einer Anbindung einer Crashbox angeordnet. Hierdurch wird eine bessere Abstützung bei einem seitlich versetzten Aufprall erreicht.

Dies kann weiterhin besonders bevorzugt dadurch gesteigert werden, dass die beiden außenliegenden ringförmigen Bereiche durch einen Hilfsquerträger zusätzlich untereinander verbunden sind. Der Hilfsquerträger ist besonders bevorzugt im Wesentlichen parallel versetzt unterhalb des eigentlichen Querträgers angeordnet.

Erfindungsgemäß möglich ist die Anordnung eines zweiten Paares Crashboxen oder Längsträger auf die Kraftfahrzeugvertikalrichtung unterhalb der vorgenannten Crashboxen, wobei diese weiteren Crashboxen einen weiteren unteren Lastpfad ausbilden und im unteren Teil des Endbereiches des Querträgers befestigt sein können.

Der Querträger selbst weist in Draufsicht ein um die Kraftfahrzeugvertikalachse bogenförmig gekrümmten Verlauf auf. Insbesondere sind die Endbereiche mit einer stärkeren Krümmung in Relation zu einem Mittelbereich versehen.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen:
- Figur 1: eine perspektivische Darstellung der erfindungsgemäßen Stoßfängeranordnung von vorne,
- Figur 2: eine perspektivische Ansicht der Stoßfängeranordnung von hinten,
- Figur 3: eine Rückansicht des Querträgers,
- Figur 4 bis 7: Querschnittsansichten der Schnittlinien aus Figur 2,
- Figur 8: ein Crashszenario mit Deformation in Längsrichtung in Ansicht von oben und
- Figur 9: eine Anordnung mit Hilfsquerträger,
- Figur 10: eine Alternative ausgestaltungsvariante der erfindungsgemäßen Stoßfängeranordnung.

In den Figuren werden für gleiche oder ähnliche Bauteile dieselben Bezugszeichen verwendet, auch wenn eine wiederholte Beschreibung aus Vereinfachungsgründen entfällt.

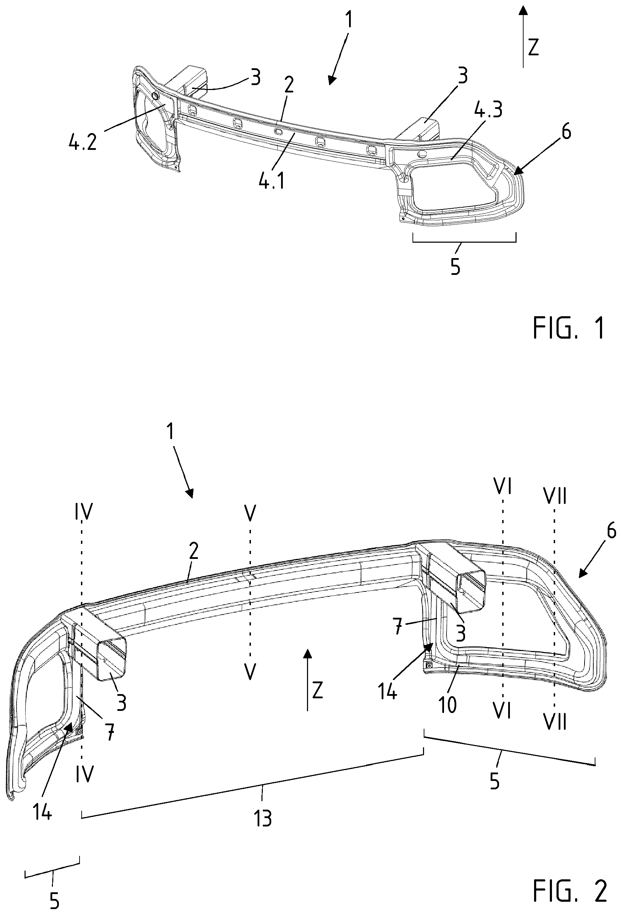

Figur 1 zeigt eine erfindungsgemäße Stoßfängeranordnung 1 von vorne. Zu erkennen ist ein Querträger 2, welcher sich im Wesentlichen über die Breite eines nicht näher dargestellten dahinter befindlichen Kraftfahrzeuges erstreckt. Der Querträger 2 ist an das Kraftfahrzeug unter Eingliederung von Crashboxen 3 gekoppelt. Auf der Vorderseite des Querträgers 2 ist ein mehrteiliges Schließblech 4 (4.1, 4.2, 4.3) angeordnet. Erfindungsgemäß zeichnet sich der Querträger 2 dadurch aus, dass er in einem jeweiligen Endbereich 5 einen ringfömig ausgebildeten Abschnitt aufweist. Ringförmig bedeutet hier ein im Wesentlichen quadratischer ringförmiger Abschnitt. Zusätzlich ist ein Teil des Endabschnittes 6 des Querträgers 2 auf die Kraftfahrzeugvertikalrichtung Z nach unten schräg verlaufend ausgebildet.

Figur 2 zeigt eine perspektivische Ansicht der Stoßfängeranordnung 1 von hinten. Hierbei ist zu erkennen, dass der Querträger 2 selbst einstückig und werkstoffeinheitlich ausgebildet ist. Der Querträger 2 weist einen hutförmigen Profilquerschnitt 8 auf. Der hutförmige Profilquerschnitt 8 ist auch jeweils in dem ringförmigen Endbereich 5 über die gesamte Ringform ausgebildet. Der ringförmige Abschnitt im Endbereich 5 ist auf die Kraftfahrzeugvertikalrichtung Z unterhalb des eigentlichen Querträgers 2 selbst ausgebildet. Der Abschnitt 6 selbst ist auf die Kraftfahrzeugvertikalrichtung Z schräg nach unten verlaufend angeordnet. Ferner ist ein Mittelabschnitt 13 vorhanden. Darüber hinaus ist ein unterer Anbindungsbereich 14 vorhanden, für nicht näher dargestellte optional vorhandene weitere Crashboxen.

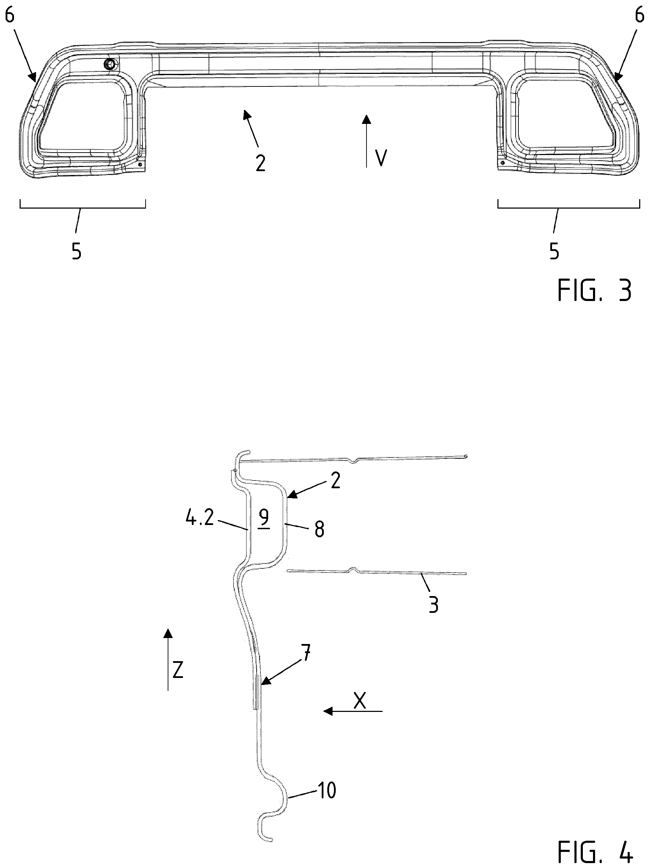

Figur 3 zeigt eine Rückansicht des Querträgers 2, welcher ebenfalls nochmals im äußeren Endbereich 5 der schräg nach unten verlaufende Abschnitt 6 gezeigt ist. Ferner, dass auf die Kraftfahrzeugvertikalrichtung Z bezogen, der ringförmige Abschnitt unterhalb des eigentlichen Hauptquerträgers ausgebildet ist.

Wie man ebenfalls noch in Figur 2 erkennen kann, ist ein nach unten orientiert verlaufender Teil 7 des ringförmigen Abschnittes unterhalb eines Anbindungsbereiches einer Crashbox 3 angeordnet.

Figur 4 bis Figur 7 zeigen verschiedene Querschnittsansichten gemäß der Schnittlinien IV-IV bis VII-VII aus Figur 2.

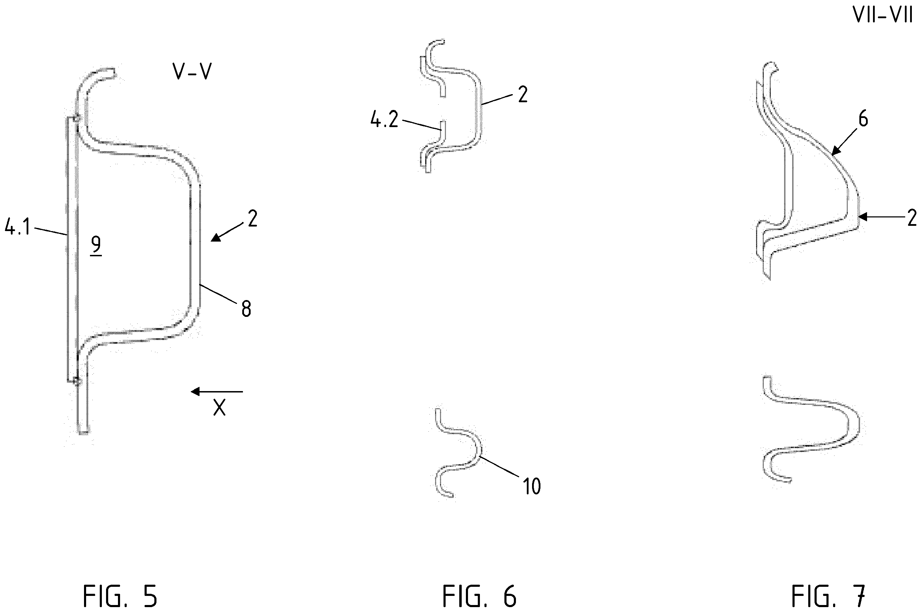

Figur 4 zeigt eine entsprechende Querschnittsansicht der Schnittlinie IV-IV aus Figur 2. Hierbei ist die Crashbox 3 zu erkennen, ferner das nach hinten ausgebildete hutförmige Profil 8 des Querträgers 2. Eine Öffnung 9 ist auf die Kraftfahrzeuglängsrichtung X nach vorne orientiert angeordnet. Die Öffnung 9 ist hier jedoch von einem Schließblech 4 verschlossen. Das Schließblech 4 erstreckt sich dabei nicht nur über die Öffnung 9, sondern auch über einen nach unten orientiert verlaufenden Teil 7 des Querträgers 2 bzw. des ringförmigen Endabschnittes. Ein unterer Teil 10 des ringförmigen Endbereiches 5 weist ebenfalls einen hutförmigen Verlauf auf. Der Querträger 2 selbst weist gemäß Figur 5 Schnittlinie V-V ein hutförmiges Profil 8 auf sowie das mittig angeordnete Schließblech 4. Die Öffnung 9 ist auf die Kraftfahrzeuglängsrichtung X nach vorne orientiert ausgebildet.

Gemäß Schnittlinie VI-VI ist der untere Teil sowie der obere Teil des Querträgers jeweils hutförmig ausgebildet. Das Schließblech 4 kann, wie dargestellt, Aussparungen aufweisen, beispielsweise zur Gewichtseinsparung und/oder zur Anbindung einer nicht näher dargestellten Abschleppöse.

Gemäß Figur 7 ist dann die Schnittlinie VII-VII dargestellt. Hier ist der schräg nach unten verlaufende Teil ausgebildet. Gleichzeitig wird die Querschnittsfläche des Querträgers 2 in diesem Bereich vergrößert.

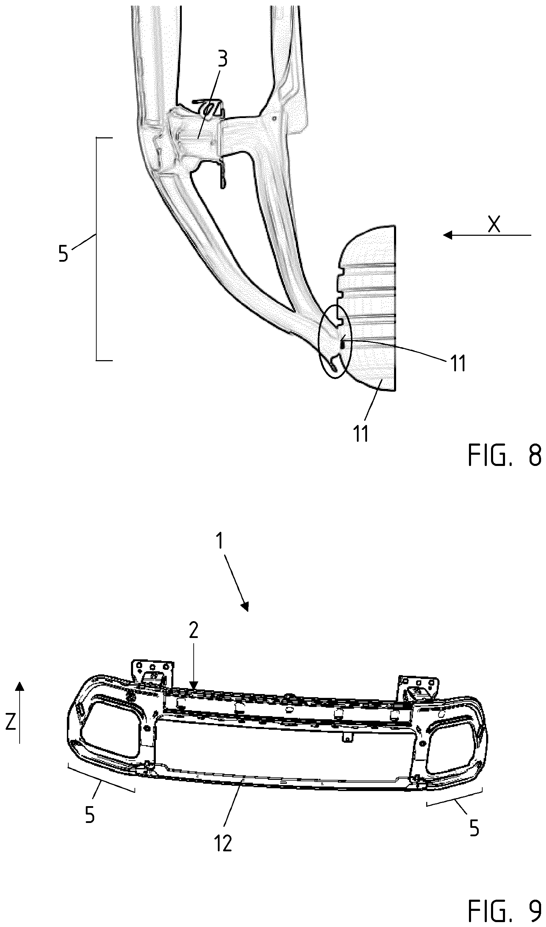

Der hierdurch erreichte Effekt ist in Figur 8 dargestellt. Bei einer Verformung in Kraftfahrzeug-X-Richtung trifft eine Rückseite des Querträgers 2 bzw. des ringförmig ausgebildeten Endbereiches 5 auf eine in Kraftfahrzeuglängsrichtung X dahinter befindliches Rad 11 und stützt sich an diesem Rad 11 ab. Eingegliedert kann ein nicht näher dargestelltes Radhaus sein. Hierdurch wird ein zweiter Lastpfad über das Rad 11 ausgebildet und nicht nur über die bereits verformte Crashbox 3. Dadurch, dass der Endbereich 5 auf die Kraftfahrzeugvertikalrichtung Z bezogen, schräg nach unten verläuft, trifft dieser, bezogen auf die Kraftfahrzeugvertikalrichtung Z auf Höhe eines Radmittelpunktes bzw. darunter auf. Ein Aufbocken bzw. Übergleiten über das Rad 11 wird hierdurch ebenfalls sicher vermieden. Gleichzeitig ist der Endbereich 5 soweit über die Crashboxen 3 bzw. den Längsträger überstehend ausgebildet, dass eine ausreichende Überdeckung mit der Radfläche bzw. der Radbreite, in Fahrzeugquerrichtung betrachtet vorhanden ist.

Figur 9 zeigt eine weitere Ausgestaltungsvariante der erfindungsgemäßen Stoßfängeranordnung 1. Hierbei ist ein Hilfsquerträger 12 angeordnet, welcher auf die Kraftfahrzeugvertikalrichtung Z bezogen unterhalb des eigentlichen Querträgers 2 ausgebildet ist. Dieser Hilfsquerträger 12 verbindet die beiden ringförmig ausgebildeten Endbereiche 5 miteinander.

Besonders bevorzugt ist der Querträger 2 selbst, jedoch ausschließlich oder Hilfsquerträger 12 aus einem Stahlwerkstoff ausgebildet, insbesondere aus einem warmumformbaren und presshärtbaren Stahl. Es können insbesondere unter Berücksichtigung des Schließbleches 4 mit der erfindungsgemäßen Stoßfängeranordnung 1 die Bauteilanzahl reduziert werden, gleichzeitig die Crashperformance deutlich gesteigert werden, bei verringertem Eigengewicht der gesamten Stoßfängeranordnung 1. Besonders bevorzugt kann beschichtetes oder auch unbeschichtetes Material verwendet werden. Jedes Pressformbauteil, mithin der Querträger 2 bzw. die Schließbleche 4 sowie auch der Hilfsquerträger 12 sind bevorzugt aus einem gleich dicken Werkstoff, mithin eine einheitliche Materialdicke für sich ausgebildet. Schließblech 4, Querträger 4 und Hilfsquerträger 12 können jedoch voneinander verschiedene Materialdicken aufweisen. Somit kann ebenfalls durch gezielter Materialeinsatz effizient das Eigengewicht reduziert werden, gleichzeitig jedoch die Steifigkeit und Crashperformance gesteigert werden.

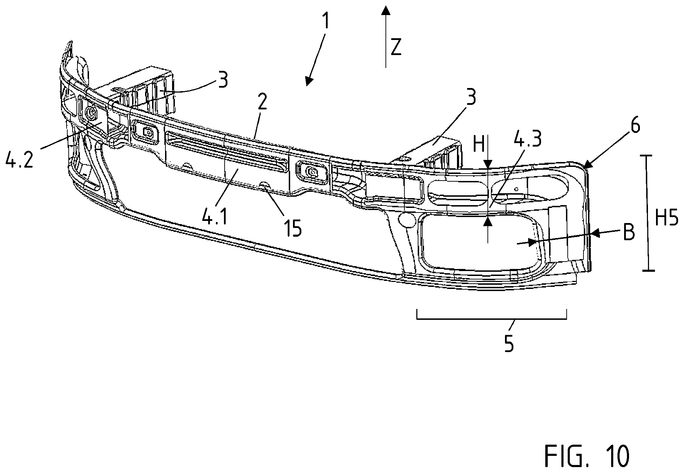

Figur 10 zeigt eine alternative Ausgestaltungsvariante einer erfindungsgemäßen Stoßfängeranordnung 1.

In dem Mittelabschnitt 13 ist in dem Querträger 2 ein auf die Kraftfahrzeugvertikalrichtung Z nach unten ausgebildeter Bereich 15 dargestellt. Durch diesen Versatz bzw. nach unten ausgebildeten Bereich 15 wird die Crashanforderung eines bumper to bumper Tests erfüllt.

In den äußeren Endbereichen 5 ist jeweils ein ringförmiger Bereich ausgebildet.

Ferner ist ein Hilfsquerträger angeordnet. Der ringförmige Bereich ist auch auf die Kraftfahrzeugvertikalrichtung Z nach unten orientiert, bezogen auf den Querträger 2 selbst ausgebildet. Die Schließbleche 4 (4.1, 4.2, 4.3) weisen vorne Öffnungen auf.

Die Querschnittsfläche aufgrund der dortigen Breite B ist mindestens gleich oder vergrößert ausgebildet zur Höhe der Querschnittsfläche H im Endabschnitt.

Zur Kenntnis nochmal, dass der ringförmige Bereich im jeweiligen Endabschnitts des Querträger 2 selbst auf die Kraftfahrzeugvertikalrichtung Z nach unten versetzt ist. Das heiß, der obere Teil des ringförmigen Bereichs 15 ist auf Höhe des Querträgers 2 angeordnet. Der sich darin anschließende ringförmige Bereich ist auf die Kraftfahrzeugvertikalrichtung Z nach unten orientiert angeordnet.

Allen Ausführungsbeispielen ist gemein, dass insbesondere der Querschnitt 2 im ringförmigen Bereich 15 des eigentlichen Querträgers 2, der wiederum als einheitliches, einstückiges Pressumformteil hergestellt ist, selbst profiliert ist. Dies ist im einfachsten Fall eine u-förmige Profilierung. Besonders bevorzugt setzt sich hier auch der hutförmige Querschnitt des Querträgers auch in dem gesamten ringförmigen Bereich fort. Hierdurch wird eine hohe Steifigkeit erreicht.

Die Gesamthöhe H5 des Endabschnittes ist mindestens 50 %, bevorzugt 100 % und ganz besonders bevorzugt 150 % größer als die Höhe H des Querträgers selber. Insbesondere weist die Höhe H mehr als 90mm, insbesondere größer als 100mm auf. Die Höhe H5 im ringförmigen Bereich liegt besonders bevorzugt zwischen 200mm und 400mm.

### Bezugszeichen:

- 1 -: Stoßfängeranordnung
- 2 -: Querträger
- 3 -: Crashbox
- 4 -: Schließblech
- 5 -: Endbereich
- 6 -: schräg verlaufender Abschnitt
- 7 -: nach unten orientiert verlaufender Teil zu 5
- 8 -: hutförmiges Profil
- 9 -: Öffnung
- 10 -: unterer Teil zu 5
- 11 -: Rad
- 12 -: Hilfsquerträger
- 13 -: Mittelabschnitt
- 14 -: unterer Anbindungsbereich
- 15 -: Bereich

- Z -: Kraftfahrzeugvertikalrichtung
- X -: Kraftfahrzeuglängsrichtung

- H -: Höhe
- B -: Breite
- H5 -: Höhe zu 5

## Patentansprüche

1. Stoßfängeranordnung (1) für ein Kraftfahrzeug, aufweisend einen Querträger (2), welcher über Crashboxen (3) an dem Kraftfahrzeug koppelbar ist und als werkstoffeinheitliches einstückiges Pressumformbauteil hergestellt ist, wobei der Endbereich (5) ringförmig ausgebildet ist, **dadurch gekennzeichnet, dass** die Ringform, bezogen auf den Querträger (2) in Kraftfahrzeugvertikalrichtung (Z) nach unten orientiert angeordnet ist, dergestalt, dass ein nach unten orientiert verlaufender Teil des ringförmigen Bereiches unterhalb einer Anbindung der Crashbox (3) angeordnet ist.

2. Stoßfängeranordnung (1) nach Anspruch 1, **dadurch gekennzeichnet, dass** der Querschnitt des Querträgers (2) hutförmig ausgebildet ist, wobei die Öffnung (9) der Hutform auf die Kraftfahrzeuglängsrichtung (X) bezogen nach vorne zeigend angeordnet ist.

3. Stoßfängeranordnung nach Anspruch 1 oder 2, **dadurch gekennzeichnet, dass** der Querträger in einem jeweiligen Endbereich (5), bezogen auf die Kraftfahrzeugvertikalrichtung (Z) schräg nach unten orientiert verlaufend ausgebildet ist.

4. Stoßfängeranordnung (1) nach einem der vorangehenden Ansprüche, **dadurch gekennzeichnet, dass** der ringförmige Bereich im Querschnitt selbst profiliert, insbesondere u-förmig, besonders bevorzugt hutförmig ausgebildet ist.

5. Stoßfängeranordnung (1) nach einem der vorangehenden Ansprüche, **dadurch gekennzeichnet, dass** der Endbereich (5) in seiner Querschnittsfläche verbreitert ausgebildet ist.

6. Stoßfängeranordnung (1) nach einem der vorangehenden Ansprüche, **dadurch gekennzeichnet, dass** auf gegenüberliegenden Seiten angeordneten ringförmigen Bereich durch einen Hilfsquerträger (12) miteinander verbunden sind, wobei der Hilfsquerträger (12) unterhalb des Querträgers (2) angeordnet ist.

7. Stoßfängeranordnung (1) nach einem der vorangehenden Ansprüche, **dadurch gekennzeichnet, dass** ein Schließblech (4) zumindest längenabschnittsweise angeordnet ist, welches insbesondere die Öffnung (9) der Hutform zumindest teilweise verschließt.

8. Stoßfängeranordnung (1) nach einem der vorangehenden Ansprüche, **dadurch gekennzeichnet, dass** eine Außenseite des Endbereiches (5) im Einbauzustand auf die Kraftfahrzeugquerrichtung bezogen vor eine Radfläche angeordnet ist, dergestalt, dass bei Verformung des Querträgers (2) in Kraftfahrzeuglängsrichtung (X) eine Rückseite des Querträgers (2) sich an einem Radhaus und/oder Radfläche eines Rades (11) abstützt.

9. Stoßfängeranordnung (1) nach einem der vorangehenden Ansprüche, **dadurch gekennzeichnet, dass** der Querträger (2) in Draufsicht um die Kraftfahrzeugvertikalachse einen gekrümmten Verlauf aufweist, wobei insbesondere die Endbereiche (5) eine bogenförmige Krümmung aufweisen oder abgewinkelt zum Mittelabschnitt (13) ausgebildet sind.

## Claims

1. Bumper arrangement (1) for a motor vehicle, having a cross-member (2) that can be coupled to the motor vehicle via crash boxes (3) and is produced as a one-piece press-formed component of a uniform material, wherein
the end region (5) is of ring shape, **characterised in that**
the ring shape is arranged oriented downwards in relation to the cross-member (2) in the vertical direction (Z) of the vehicle in such a way that a downwardly oriented part of the ring-shaped region is arranged below a connection of the crash box (3).

2. Bumper arrangement (1) according to claim 1,
**characterised in that** the cross-section of the cross-member (2) is hat-shaped, wherein the opening (9) of the hat shape is arranged pointing forwards with respect to the longitudinal direction (X) of the motor vehicle.

3. Bumper arrangement according to claim 1 or 2,
**characterised in that** the cross-member is formed in a respective end region (5) so as to extend obliquely downwards with respect to the vertical direction (Z) of the motor vehicle.

4. Bumper arrangement (1) according to any one of the preceding claims,
**characterised in that** the ring-shaped region is itself profiled in cross-section, in particular U-shaped, particularly preferably hat-shaped.

5. Bumper arrangement (1) according to any one of the preceding claims,
**characterised in that** the end region (5) is of widened cross-sectional area.

6. Bumper arrangement (1) according to any one of the preceding claims,
**characterised in that** ring-shaped regions arranged on opposite sides are connected to one another by an auxiliary cross-member (12), the auxiliary cross-member (12) being arranged below the cross-member (2).

7. Bumper arrangement (1) according to any one of the preceding claims,
**characterised in that** a closure plate (4) is arranged at least in longitudinal sections, which in particular at least partially closes the opening (9) of the hat shape.

8. Bumper arrangement (1) according to any one of the preceding claims,
**characterised in that** an outer side of the end region (5), when installed, is arranged, in relation to the transverse direction of the motor vehicle, in front of a wheel surface in such a way that when the cross-member (2) is deformed in the longitudinal direction (X) of the motor vehicle, a rear side of the cross-member (2) is supported on a wheel housing and/or wheel surface of a wheel (11).

9. Bumper arrangement (1) according to any one of the preceding claims,
**characterised in that** the cross-member (2) has in plan view a profile that is curved about the vertical axis of the motor vehicle, wherein in particular the end regions (5) have an arcuate curvature or are formed at an angle to the central portion (13).

## Revendications

1. Agencement de pare-chocs (1) pour un véhicule automobile, présentant une traverse (2) qui peut être couplée par le biais de caissons de protection contre les chocs (3) au véhicule automobile et est fabriquée comme composant formé à la presse d'un seul tenant en un matériau homogène, dans lequel
la zone d'extrémité (5) est réalisée en anneau, **caractérisé en ce que**
la forme annulaire est agencée orientée vers le bas par rapport à la traverse (2) dans le sens vertical du véhicule automobile (Z) de telle manière qu'une partie s'étendant orientée vers le bas de la zone annulaire soit agencée en dessous d'une liaison du caisson de protection contre les chocs.

2. Agencement de pare-chocs (1) selon la revendication 1,
**caractérisé en ce que** la section transversale de la traverse (2) est réalisée en forme de chapeau, dans lequel l'ouverture (9) de la forme de chapeau est agencée tournée vers l'avant par rapport au sens longitudinal du véhicule automobile (X).

3. Agencement de pare-chocs selon la revendication 1 ou 2,
**caractérisé en ce que** la traverse est réalisée s'étendant orientée en biais vers le bas par rapport au sens vertical du véhicule automobile (Z) dans une zone d'extrémité (5) respective.

4. Agencement de pare-chocs (1) selon l'une quelconque des revendications précédentes,
**caractérisé en ce que** la zone annulaire est réalisée autoprofilée en section transversale, en particulier en forme de U, le plus préférentiellement en forme de chapeau.

5. Agencement de pare-chocs (1) selon l'une quelconque des revendications précédentes,
**caractérisé en ce que** la zone d'extrémité (5) est réalisée élargie dans son aire de section.

6. Agencement de pare-chocs (1) selon l'une quelconque des revendications précédentes,
**caractérisé en ce que** des zones annulaires agencées sur des côtés opposés sont reliées entre elles par une traverse auxiliaire (12), dans lequel la traverse auxiliaire (12) est agencée en dessous de la traverse (2).

7. Agencement de pare-chocs (1) selon l'une quelconque des revendications précédentes,
**caractérisé en ce qu'**une tôle de fermeture (4) est agencée au moins par section longitudinale qui ferme au moins partiellement en particulier l'ouverture (9) de la forme de chapeau.

8. Agencement de pare-chocs (1) selon l'une quelconque des revendications précédentes,
**caractérisé en ce qu'**un côté extérieur de la zone d'extrémité (5) est agencé dans l'état de montage par rapport au sens transversal du véhicule automobile avant une surface de roue de telle manière qu'en cas de déformation de la traverse (2) dans le sens longitudinal du véhicule automobile (X), un côté arrière de la traverse (2) s'appuie contre un passage de roue et/ou une surface de roue d'une roue (11).

9. Agencement de pare-chocs (1) selon l'une quelconque des revendications précédentes,
**caractérisé en ce que** la traverse (2) présente en vue en élévation autour de l'axe vertical de véhicule automobile une étendue incurvée, dans lequel en particulier les zones d'extrémité (5) présentent une courbure arquée ou sont réalisées coudées par rapport à la section médiane (13).
